(19) Europäisches Patentamt / European Patent Office / Office européen des brevets

(11) **EP 1 446 670 B1**

(12) **FASCICULE DE BREVET EUROPEEN**

(45) Date de publication et mention de la délivrance du brevet:
**11.01.2012 Bulletin 2012/02**

(51) Int Cl.:
*G01P 15/10* (2006.01)      *G01P 1/00* (2006.01)
*G01D 3/02* (2006.01)      *G01C 19/56* (2012.01)

(21) Numéro de dépôt: **02788052.5**

(22) Date de dépôt: **13.11.2002**

(86) Numéro de dépôt international:
**PCT/FR2002/003881**

(87) Numéro de publication internationale:
**WO 2003/044538 (30.05.2003 Gazette 2003/22)**

(54) **PROCEDE DE MESURE ACCELEROMETRIQUE, COMPENSEE THERMIQUEMENT, AVEC AU MOINS UN DISPOSITIF A DEUX RESONATEURS VIBRANTS**

MITTELS VIBRIERENDER DOPPELRESONATORANORDNUNG THERMISCH KOMPENSIERTES BESCHLEUNIGUNGSMESSVERFAHREN

METHOD FOR TEMPERATURE-COMPENSATED ACCELEROMETER MEASUREMENT, WITH AT LEAST A DEVICE COMPRISING TWO VIBRATING RESONATORS

(84) Etats contractants désignés:
**DE FR GB IT**

(30) Priorité: **23.11.2001 FR 0115172**

(43) Date de publication de la demande:
**18.08.2004 Bulletin 2004/34**

(73) Titulaire: **SAGEM Défense Sécurité
75015 Paris (FR)**

(72) Inventeurs:
• **LE ROY, Jean-Claude
F-95800 Cergy Le Haut (FR)**
• **FEATONBY, Paul
F-92600 Asnières (FR)**

(74) Mandataire: **Gorrée, Jean-Michel et al
Cabinet Plasseraud
52 rue de la Victoire
75440 Paris Cedex 09 (FR)**

(56) Documents cités:
**US-A- 5 379 639      US-B1- 6 230 565**

**Description**

La présente invention concerne le domaine des mesures accélérométriques, et plus spécifiquement elle concerne des perfectionnements apportés dans le domaine des mesures accélérométriques effectuées avec des dispositifs à deux résonateurs vibrants travaillant respectivement dans des états de contraintes de signes opposés (en général en traction et en compression).

Ainsi, il est déjà connu d'utiliser des dispositifs à deux résonateurs vibrants comportant deux poutres vibrantes respectives, parallèles et identiques, travaillant l'une en traction et l'autre en compression, pour détecter une composante d'accélération (voir par exemple les documents FR 00 10675 et FR-A-2 784 752 au nom de la Déposante ; FR-A-2 685 964, FR-A-2 784 752). Comme illustré à titre d'exemple à la figure 1 des dessins ci-annexés, un tel dispositif accélérométrique 1 comprend, de façon très schématique, deux accéléromètres miniatures $Acc_1$, $Acc_2$ à masse pendulaires non asservies. Chacun d'eux comporte une masse pendulaire (ou masse sismique) M sollicitée vers une position de repos par une liaison avec un socle S qui est constituée d'une poutre ou lame vibrante P (les moyens d'excitation en vibration et de détection de la vibration n'étant pas illustrés) et d'une pièce C formant charnière. Les deux poutres $P_1$, $P_2$ sont identiques et parallèles et sont disposées en position inversée l'une par rapport à l'autre, de telle sorte que, sous l'action des deux masses sismiques identiques respectives $M_1$, $M_2$, l'une $P_1$ des poutres travaille en compression et que l'autre $P_2$ des poutres travaille en traction. L'ensemble des deux accéléromètres individuels $Acc_1$, $Acc_2$ est enfermé dans un boîtier étanche B dans lequel généralement un vide poussé est établi.

Lorsque le dispositif accélérométrique 1 est soumis à une accélération $\gamma$ dirigée suivant l'axe sensible, c'est-à-dire par exemple perpendiculaire à l'étendue des poutres vibrantes $P_1$, $P_2$, il en résulte une variation des fréquences de résonance des poutres en relation avec l'accélération appliquée et avec la contrainte (compression ou traction) subie par les poutres :

$$f_1 = f_{01} + k_{11}\,\gamma - k_{12}\,\gamma^2 + k_{13}\,\gamma^3$$

$$f_2 = f_{02} - k_{21}\,\gamma - k_{22}\,\gamma^2 - k_{23}\,\gamma^3$$

où $f_{01}$ et $f_{02}$ sont les fréquences de résonance des deux poutres respectives $P_1$ et $P_2$ en l'absence d'accélération, et les coefficients k sont des constantes.

Ce type de dispositif accélérométrique présente plusieurs intérêts, notamment en raison de son faible encombrement (structure plate dont l'épaisseur peut être inférieure à 1 mm pour des dimensions en plan de l'ordre du centimètre) et de sa fabrication simple et économique par des procédés d'attaque chimique sur une tranche de cristal en général piézoélectrique, mais pouvant être du silicium, avec possibilité de fabrication collective simultanée de plusieurs accéléromètres sur une même tranche de matériau.

Toutefois, dans le type de dispositif accélérométrique considéré à double résonateur vibrant, les fréquences de résonance des poutres vibrantes $P_1$, $P_2$ dépendent non seulement de l'accélération $\gamma$ à laquelle est soumis le dispositif, mais aussi de la température T des poutres. On est donc conduit à compléter les équations précédentes par un polynôme en T :

$$f_1 = f_{01} + \Pi_1^1(\gamma^n) + \Pi_1^2(T^n)$$

$$f_2 = f_{02} + \Pi_2^1(\gamma^n) + \Pi_2^2(T^n)$$

Un calcul simple de la valeur de l'accélération $\gamma$ en fonction de la fréquence mesurée $f_1$ et/ou $f_2$ nécessite de connaître la température des poutres $P_1$, $P_2$.

Par US 5 379 639 A, on connaît un procédé de mesure accélérométrique par détermination de la valeur, compensée en fonction de la température, d'une accélération à partir de mesures de fréquences faites sur un dispositif accélérométrique à deux résonateurs vibrants de géométries similaires, travaillant respectivement dans des états de contraintes de signes opposés, lequel procédé comprend les étapes qui suivent :

- le dispositif étant soumis à une composante d'accélération, on détermine les fréquences $f_1$ et $f_2$ des vibrations respectives des deux résonateurs vibrants, sachant que les valeurs respectives de ces deux fréquences sont influencées par l'accélération et par la température ; et
- on détermine la somme $f_1 + f_2$ des deux fréquences mesurées, sachant que cette somme est influencée par la température. Cette somme $f_1 + f_2$ est, selon ce document de brevet, représentative de la température pour compenser la mesure de l'accélération.

Par US 6 230 565 B1, on connaît un procédé analogue, selon lequel on prend en considération la moyenne ou la somme des fréquences $f_1$ et $f_2$ de vibration des deux résonateurs vibrants, ainsi qu'un signal de température fourni par un capteur de température indépendant disposé à proximité des résonateurs, pour en déduire une accélération compensée en température et en pression.

Or il n'est pas possible, en pratique, de disposer un capteur approprié, dans le boîtier B, à proximité immédiate des poutres vibrantes, ni de disposer un capteur thermique au contact même des poutres vibrantes $P_1$, $P_2$ (ce qui constituerait la solution idéale pour obtenir une valeur exacte de la température) en raison de la perturbation que la présence de ce capteur provoquerait sur la vibration des poutres. Enfin, le recours à un procédé de mesure thermoélectrique serait susceptible de perturber la température de la poutre elle-même.

L'invention a donc pour but de proposer un procédé de calcul de la valeur de l'accélération, compensée en température, à partir des mesures des fréquences $f_1$, $f_2$ des deux poutres vibrantes $P_1$, $P_2$, comme connu de US 5 379 639 A sans avoir recours à un moyen quelconque de détection thermique disposé au contact des poutres vibrantes.

A ces fins, l'invention propose un procédé du type connu par US 5 379 639 A, et qui se caractérise en ce qu'il comprend de plus les étapes qui suivent

- à partir d'une corrélation préétablie de la variation de la quantité $f_1 + f_2$ en fonction de la température, on relève les valeurs possibles $T_i$ de température correspondant à la valeur de la somme $f_1 + f_2$ ci-dessus déterminée ;
- on mesure la valeur ($G_{mes}$) d'une grandeur représentative de la température à proximité du dispositif à deux résonateurs vibrants ;
- à l'aide d'une fonction de transfert H préalablement établie, on détermine une valeur estimée $G_{estimée} = H(G_{mes})$ de la susdite grandeur à partir de ladite valeur mesurée $G_{mes}$, cette grandeur estimée étant représentative de la température estimée des résonateurs vibrants ;
- à partir de la valeur estimée $G_{estimée}$ de ladite grandeur et des valeurs possibles de température $T_i$, on détermine, pour chaque valeur $T_i$, la probabilité $P(T_i)$ pour que la valeur de la température des résonateurs soit $T_i$ ;
- on calcule une valeur pondérée T de la température des résonateurs vibrants $T = \Sigma\, P(T_i) \times T_i$ ;
- enfin, à partir d'une et/ou des fréquences mesurées $f_1$ et $f_2$ et de la valeur pondérée T de la température, on détermine la valeur compensée en température de l'accélération subie par le dispositif accélérométrique.

Des modes de mise en oeuvre avantageux du procédé de l'invention font l'objet des revendications dépendantes 2 à 15.

Grâce aux dispositions de l'invention, on est en mesure de tenir compte, dans le calcul de la valeur de l'accélération $\gamma$, d'une valeur de température T, ou d'une grandeur représentative de cette température (par exemple une grandeur variant linéairement en fonction de la température) au voisinage des résonateurs - et donc intrinsèquement inexacte puisque n'étant pas la valeur de la température des résonateurs - et à partir d'un choix, basé par un calcul de probabilité, entre plusieurs valeurs possibles de la température.

En pratique, les deux résonateurs vibrants ne peuvent pas être rigoureusement identiques du point de vue géométrique : il est alors souhaitable de tenir compte de cette différence géométrique en corrigeant la somme $f_1 + f_2$ avec un terme d'erreur estimé à partir de l'accélération calculée lors du cycle de calcul précédent, s'il existe.

En pratique toujours, la mise en oeuvre du procédé de l'invention avec un polynôme $\Pi(T^n)$ d'ordre n élevé se révèle complexe, en raison du nombre n élevé des solutions mathématiques, c'est-à-dire du nombre n de valeurs possibles de température $T_i$ correspondant à une valeur donnée de la fréquence $f_1 + f_2$. Il en résulte également un calcul plus long des probabilités $P(T_i)$ et de la valeur $T = \Sigma\, P(T_i) \times T_i$. Une valeur T d'une précision suffisante est obtenue, de façon concrète, avec un polynôme d'ordre 2: $\Pi(T^2)$ ou d'ordre 3: $\Pi(T^3)+$.

La relation mathématique entre la fréquence, l'accélération et la température peut s'écrire

$$f \;=\; f_0 \;+\; \Pi(\gamma^3) \;+\; a\,(T-T_o)^2$$

dans le cas d'un polynôme en T d'ordre 2 et

$$f = f_0 + \Pi(\gamma^3) + a\ (T-T_o)^2 + b\ (T-T_o)^3$$

dans le cas d'un polynôme en T d'ordre 3.

En pratique, les termes en $\gamma^2$ et $\gamma^3$ sont faibles et peuvent être négligés devant le terme en $\gamma$. Les deux équations ci-dessus peuvent alors s'écrire sous forme simplifiée respectivement :

$$f = f_0 + k\gamma + a\ (T-T_o)^2$$

et

$$f = f_0 + k\gamma + a\ (T-T_o)^2 + b\ (T-T_o)^3$$

La courbe correspondant à la fonction f(T) est une parabole ou une cubique, respectivement, dont l'extremum local (situé dans la fourchette des températures de mise en oeuvre) correspond à la température d'inversion ("turn over") $T_o$. Ainsi, à toute valeur f de la fréquence sont associables deux valeurs possibles de température $T_a$ et $T_b$,- dont une seule est la température exacte du résonateur vibrant. Dans le cas d'un polynôme du troisième ordre, la troisième solution est aberrante par rapport au domaine de température considéré et peut être rejetée d'entrée. La détermination de la température des résonateurs fait appel à une estimation probabiliste et consiste à associer, à la somme $f_1 + f_2$, deux valeurs $T_a$ et $T_b$, à calculer la probabilité $P(T_a)$ pour que la température des résonateurs soit $T_a$ et la probabilité $P(T_b)$ pour que la température des résonateurs soit $T_b$, puis à calculer une valeur pondérée de la température des résonateurs

$$T = P(T_a)\ x\ T_a + P(T_b)\ x\ T_b.$$

Dans le cas de mesures accélérométriques et/ou gyroscopiques selon plusieurs axes (en pratique selon deux ou trois axes d'un référentiel) à l'aide de plusieurs dispositifs vibrants accélérométriques et/ou gyroscopiques et/ou gyrométriques respectifs (bloc senseur inertiel), on peut avantageusement prévoir que, selon chaque axe, on détermine une valeur de l'accélération compensée en température selon l'une ou l'autre des modalités exposées plus haut et, pour la détermination de l'une au moins des valeurs de l'accélération compensée en température, on utilise en tant que valeur pondérée de température, la valeur pondérée de température déterminée pour le dispositif vibrant associé à cet axe ainsi qu'au moins une valeur pondérée de température déterminée pour au moins un dispositif vibrant associé à au moins un autre axe.

Une telle mise en oeuvre trouve un intérêt tout particulier dans le cas où tous les résonateurs vibrants des dispositifs accélérométriques et/ou gyroscopiques et/ou gyrométriques sont usinés dans un même bloc de cristal.

L'invention sera mieux comprise à la lecture de la description détaillée qui suit de certains modes de réalisation donnés à titre d'exemples non limitatifs. Dans cette description, on se réfère aux dessins annexés sur lesquels :

- la figure 2 est une représentation très schématique d'un dispositif accélérométrique à deux résonateurs vibrants agencé conformément à l'invention ;
- les figures 3A et 3B sont des schémas par blocs illustrant respectivement deux mises en oeuvre préférées du procédé conforme à l'invention ;
- la figure 4 est un schéma par blocs illustrant un perfectionnement du procédé de la figure 3A ;
- la figure 5 est un schéma bloc illustrant de façon simplifiée un exemple d'agencement de capteur inertiel mettant en oeuvre les dispositions de l'invention ;
- la figure 6 est un schéma par blocs, calqué sur celui de la figure 3A, détaillant une partie fonctionnelle du capteur inertiel de la figure 5 ;
- la figure 7 est un schéma par blocs illustrant une variante de réalisation d'une portion de la partie fonctionnelle de la figure 6 ; et
- la figure 8 est un schéma par blocs, calqué sur celui de la figure 3A, illustrant encore une autre variante de réalisation.

L'invention vise à déterminer une valeur, corrigée en fonction de la température, de l'accélération $\gamma$ subie par un dispositif accélérométrique à deux résonateurs vibrants de géométries similaires, travaillant respectivement dans des états de contraintes de signes opposés. Dans l'exemple illustré, les deux résonateurs comprennent respectivement deux poutres vibrantes parallèles et sensiblement identiques travaillant respectivement notamment en traction et en compression, mais pouvant éventuellement être combinés à au moins un autre état de contrainte telle que la flexion et/ou la torsion. Dans l'exemple illustré, l'accélération $\gamma$ ou la composante de l'accélération qui est mesurée est dirigée sensiblement perpendiculairement aux poutres.

Les fréquences de vibration des deux poutres peuvent s'écrire, en fonction de la température T et de - l'accélération $\gamma$ :

$$f_1 \; = \; f_{01} \; + \; \Pi_1^1(\gamma^n) \; + \; \Pi_1^2(T^n)$$

$$f_2 \; = \; f_{02} \; + \; \Pi_2^1(\gamma^n) \; + \; \Pi_2^2(T^n)$$

Selon l'invention, on détermine les fréquences $f_1$ et $f_2$ de vibration des deux poutres vibrantes, puis on calcule la somme $f_1 + f_2$.

A partir d'une corrélation préétablie et mémorisée entre les valeurs de fréquence et les valeurs correspondantes de température $f \rightarrow \Pi(T^n)$, on détermine, pour la fréquence $f_1 + f_2$, les n valeurs $T_i$ possibles de température.

On procède à une évaluation de la température estimée des résonateurs. A cette fin, on mesure la valeur $G_{mes}$ d'une grandeur représentative de la température à proximité du dispositif à deux résonateurs vibrants ; puis, à l'aide d'une fonction du transfert H préalablement établie, on détermine une valeur estimée $G_{estimée} = H$ (Gmes) de la susdite grandeur $G_{mes}$, cette grandeur estimée étant représentative de la température estimée des résonateurs vibrants. A partir de la valeur estimée Estimée de ladite grandeur représentative de la température estimée des résonateurs et des valeurs possibles de températures $T_i$, on détermine les probabilités $P(T_i)$ pour que chaque valeur possible de température $T_i$ soit la valeur exacte de la température des résonateurs.

Une façon simple de mettre en oeuvre les dispositions précédentes consiste à effectuer directement une mesure de température, auquel cas la grandeur G représentative de la température est la température elle-même. C'est dans ce contexte qu'est exposé ce qui suit.

A proximité immédiate du boîtier du dispositif accélérométrique et soit à l'intérieur, soit plus aisément à l'extérieur de celui-ci, on dispose un capteur de température qui délivre une valeur de température mesurée $T_{mes}$. En faisant intervenir une fonction de transfert H prédéterminée par des essais antérieurs, on peut évaluer une température estimée des résonateurs vibrants $T_{estimée} = H(T_{mes})$.

A partir des valeurs $T_{estimée}$ et $T_i$, on détermine, pour chaque valeur $T_i$, la probabilité $P(T_i)$ pour que la température des résonateurs soit $T_i$. Puis on détermine une valeur pondérée T de la température

$$T \; = \; \Sigma \; P(T_i) \; . \; T_i$$

que l'on prend pour valeur de température des deux résonateurs.

Ensuite de quoi, connaissant la température T, on est en mesure de calculer la valeur de l'accélération $\gamma$ à partir d'une et/ou des fréquences mesurées $f_1$ et $f_2$.

La mise en oeuvre d'un polynôme $\Pi(T^n)$ d'ordre n élevé entraîne des calculs complexes et longs, et rend difficile l'établissement de la corrélation $f \rightarrow \Pi(T^n)$ en raison du nombre élevé des valeurs possibles $T_i$ associées à chaque valeur de fréquence.

Une précision acceptable en pratique peut être obtenue avec un polynôme d'ordre 2: $\Pi(T^2)$, ou de préférence d'ordre 3: $\Pi(T^3)$.

La fréquence de vibration s'exprime, en fonction de l'accélération et la température, par la relation

$$f \; = \; f_0 \; + \; \Pi(\gamma^3) \; + \; a \; (T-T_o)^2$$

dans le cas d'un polynôme en T d'ordre 2 ou par la relation

$$f = f_0 + \Pi(\gamma^3) + a (T-T_o)^2 + b (T-T_o)^3$$

dans le cas d'un polynôme en T d'ordre 3.

Les termes en $\gamma^2$ et $\gamma^3$ étant faibles en pratique peuvent être négligés devant le terme en $\gamma$, de sorte que les deux relations précitées peuvent s'écrire sous forme simplifiée, respectivement :

$$f = f_0 + k\gamma + a (T-T_o)^2$$

et

$$f = f_0 + k\gamma + a (T-T_o)^2 + b (T-T_o)^3$$

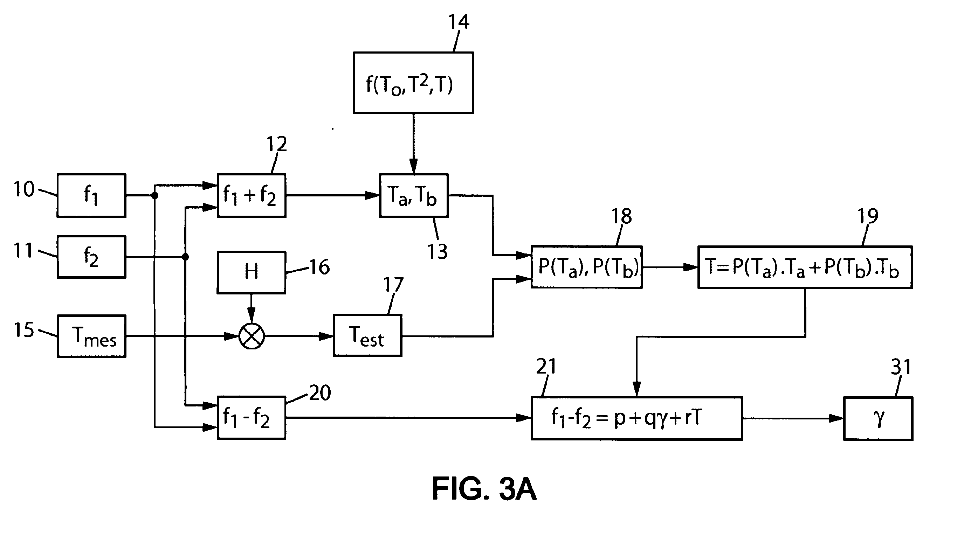

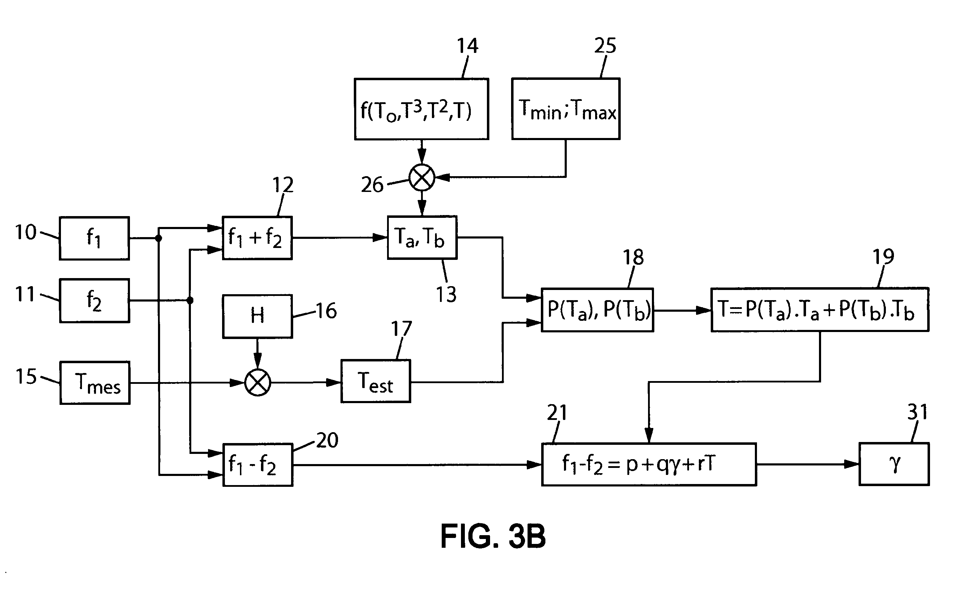

Comme représenté schématiquement à la figure 3, on mesure en 10 et 11 respectivement les fréquences $f_1$ et $f_2$ des deux résonateurs vibrants $P_1$ et $P_2$ soumises à une accélération $\gamma$, sachant que les fréquences $f_1$ et $f_2$ sont fonction de y et dé la température T, cas d'un polynôme d'ordre 2 en T :

$$f_1 = f_{01} + k_1\, \gamma + a_1 (T - T_{o1})^2$$

$$f_2 = f_{02} - k_2\, \gamma + a_2 (T - T_{o2})^2$$

(où $T_{o1}$ et $T_{o2}$ sont les températures d'inversion ("turn over") respectives), ou bien,.dans le cas d'un polynôme d'ordre 3 en T :

$$f_1 = f_{01} + k_1\gamma + a_1 (T-T_{o1})^2 + b_1 (T-T_{o1})^3$$

$$f_2 = f_{02} -\, k_2\gamma +\_a_2 (T-T_{o2})^2 + b_2 (T-T_{o2})^3$$

On constate que la somme $f_1 + f_2$ est indépendante de l'accélération $\gamma$ si $k_1 = k_2$ et ne dépend que de la température. De plus, la différence $f_1 - f_2$ dépend essentiellement de l'accélération $\gamma$ si les termes de courbure $a_1$ et $a_2$, ainsi que les valeurs d'inversion $T_{o1}$ et $T_{o2}$ sont proches les unes des autres, respectivement (les termes en $T^2$ et en $T^3$ s'éliminant). C'est sur l'exploitation des deux valeurs $f_1 + f_2$ et $f_1 - f_2$ qu'est fondé le procédé conforme à l'invention qui est exposé ci-après en regard de la figure 3A (cas d'un polynôme d'ordre 2 en T) et de la figure 3B (cas d'un polynôme d'ordre 3 en T) .

A partir des mesures de la fréquence $f_1$ en 10 et de la fréquence $f_2$ en 11, on détermine en 12 la somme $f_1 + f_2$.

A partir d'une corrélation préétablie, et tenue en mémoire en 14, entre la fréquence et la température des résonateurs (polynôme en $T^3$ et/ou $T^2$ et T), on relève en 13 les deux valeurs possibles de température $T_a$, $T_b$ correspondant à la valeur $f_1 + f_2$ issue des mesures $f_1$ et $f_2$. Dans le cas d'un polynôme d'ordre 2 en T (cas illustré à la figure 3A), les deux valeurs recherchées $T_a$ et $T_b$ sont les deux solutions de l'équation du second degré en T. Dans le cas d'un polynôme d'ordre 3 en T (cas illustré à la figure 3B), 1 l'équation du troisième degré en T a trois solutions, dont une cependant est aberrante par rapport au domaine de température considéré et doit être rejetée ; on est ainsi amené à tenir en mémoire en 25 (figure 3B) des valeurs limites, par exemple $T_{min}$ ; $T_{max}$, définissant le domaine de température et à comparer en 26 les trois solutions de l'équation du troisième degré avec lesdites valeurs limites pour éliminer la solution aberrante et ne conserver que les deux solutions convenables $T_a$, $T_b$.

Les deux valeurs de température $T_a$, $T_b$ sont les deux valeurs possibles pouvant correspondre à la fréquence

$f_1 + f_2$, mais une seule des deux valeurs de température est exacte en pratique.

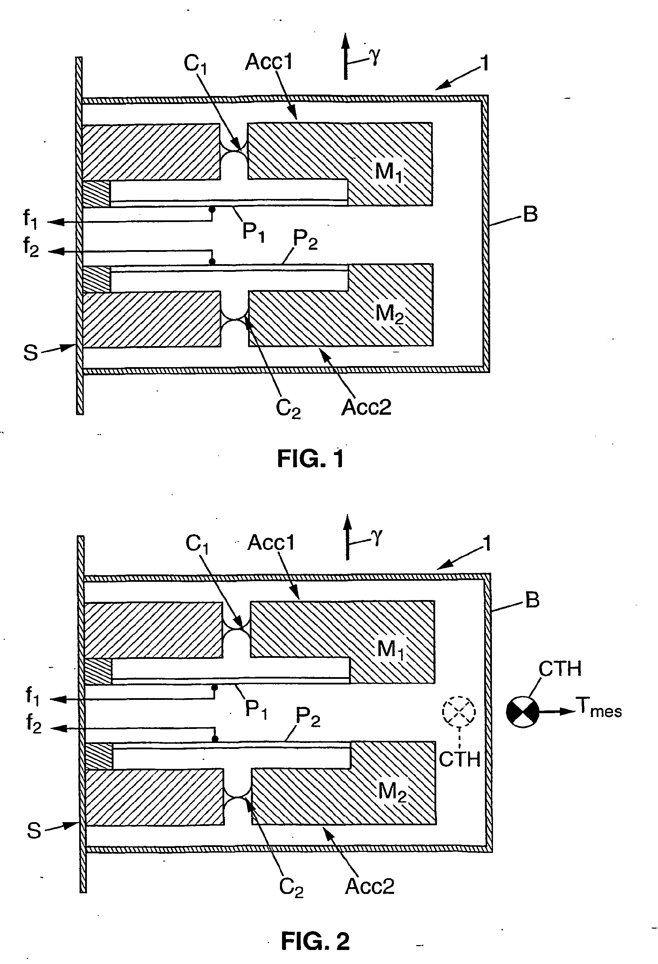

Pour effectuer une approche aussi précise que possibles de la température exacte des résonateurs (on suppose les deux résonateurs à la même température), on dispose un capteur thermique CTH à proximité immédiate des résonateurs. Ce capteur thermique peut être disposé à l'intérieur du boîtier B (comme montré en tirets à la figure 2), mais il peut également être disposé (car il s'agit d'une mise en oeuvre plus facile) à l'extérieur de ce boîtier comme illustré en trait plein à la figure 2.

Ce capteur thermique CTH fournit en 15 (figures 3A et 3B) une valeur mesurée de température $T_{mes}$, laquelle valeur $T_{mes}$ n'est qu'une valeur approchée, et non exacte, de la température des résonateurs $P_1$, $P_2$.

Préalablement à la mesure, on a établi expérimentalement une fonction de transfert H entre les valeurs exactes de température des résonateurs $P_1$, $P_2$ situés à l'intérieur du boîtier B et les valeurs de température mesurées, simultanément, par le capteur CTH à l'extérieur du boîtier B. La fonction de transfert H est tenue en mémoire en 16.

Pour fixer les idées, la fonction de transfert H peut être une fonction simple de deuxième ou troisième ordre, telle que, avec $H(p) = T(p) / T_{CHT}(p)$

$$H(p) = 1/(1 + \alpha\ p)^2$$

ou

$$H(p) = 1/[(1 + \alpha_1\ p)(1 + \alpha_2\ p)(1 + \alpha_3\ p)]$$

dans lesquelles p est l'opérateur de Laplace et $\alpha$, $\alpha_1$, $\alpha_2$, $\alpha_3$ sont des constantes dépendant de la structure du capteur de température et du temps de propagation de la chaleur entre les poutres vibrantes situées à l'intérieur du boîtier B et le capteur de température CTH situé à l'extérieur de ce boîtier.

Ainsi, à la température $T_{mes}$ mesurée à l'extérieur du boîtier B, on est en mesure d'associer en 17, par la fonction de transfert H, une valeur estimée $T_{est}$ de la température des poutres $P_1$, $P_2$ à l'intérieur du boîtier B.

Ensuite, à partir des valeurs $T_a$, $T_b$ et $T_{est}$, on effectue en 18 des calculs de probabilité donnant la probabilité $P(T_a)$ pour que la température $T_a$ soit la température des poutres $P_1$, $P_2$ et la probabilité $P(T_b)$ pour que la température $T_b$ soit la température des poutres $P_1$, $P_2$.

Pour fixer les idées, les probabilités $P(T_a)$ et $P(T_b)$ peuvent être calculées de la façon suivante :

$$P(T_a) = g(T_a)/(g(T_a) + g(T_b))$$

$$P(T_b) = g(T_b)/(g(T_a) + g(T_b))$$

avec

$$g(T_a) = 1/(\left|T_a - T_{est}\right|)$$

$$g(T_b) = 1/(\left|T_b - T_{est}\right|)$$

On pourrait également effectuer les calculs avec les fonctions suivantes :

$$g(T_a) = \exp(-\ \alpha.\left|T_a - T_{est}\right|)$$

$$g(T_b) = \exp(- \alpha . |T_b - T_{est}|)$$

dans lesquels $\alpha$ est une constante.

Les formules indiquées ici présentent l'avantage d'être simples et de conduire à des calculs rapides. Toutefois, si nécessaire, l'homme du métier est en mesure d'avoir recours à des formules plus complexes et plus précises, mais aussi entraînant des calculs plus longs.

On calcule ensuite, en 19, une valeur T de la température qui est une pondération des valeurs possibles $T_a$ et $T_b$ affectées des coefficients de pondération précédemment calculés $P(T_a)$ et $P(T_b)$ :

$$T = P(T_a).T_a + P(T_b).T_b.$$

On définit ainsi une valeur T de température des résonateurs qui est statistiquement la plus vraisemblable.

Enfin, à partir d'une des fréquences mesurées $f_1$ ou $f_2$, ou à partir des deux fréquences mesurées $f_1$ et $f_2$, et de la valeur pondérée T de la température qui vient d'être déterminée en 19, on détermine la valeur compensée en température de l'accélération $\gamma$ subie par le dispositif accélérométrique.

De façon pratique, on calcule en 20 la quantité $f_1 - f_2$. On sait que, dans le cas du polynôme d'ordre 2 en T, l'expression mathématique en est :

$$f_1 - f_2 = (f_{01}-f_{02}) + (k_1 + k_2) \gamma + a_1 (T - T_{o1})^2 - a_2 (T - T_{o2})^2$$

Autrement dit, cette expression est du type :

$$f_1 - f_2 = p + q \gamma + r T + sT^2$$

A partir de la valeur T de la température déterminée en 19, il est alors aisé de calculer, en 21, la valeur $\gamma$ à partir de T et de $f_1 - f_2$.

Dans le cas d'un polynôme d'ordre 3 en T, l'expression mathématique de $f_1 - f_2$ est plus complexe, mais est toutefois déterminable et permet également le calcul de la valeur de $\gamma$ à partir du calcul de la valeur $f_1 - f_2$.

On obtient finalement, en 31, une valeur de l'accélération $\gamma$ compensée en température.

La corrélation entre la fréquence et la température ($T^3$ et/ou $T^2$, T), tenue en mémoire en 14, peut être mémorisée sous forme d'une équation mathématique du second ou du troisième degré en T dont les coefficients sont préétablis par des mesures expérimentales préalables effectuées sur le dispositif accélérométrique 1. Les deux valeurs possibles $T_a$ et $T_b$ sont alors calculées en résolvant cette équation pour chaque valeur donnée de $f_1 + f_2$. On peut aussi tenir en mémoire en 14 un tableau donnant, pour toutes les valeurs possibles $f_1 + f_2$, les deux valeurs possibles correspondantes $T_a$, $T_b$.

De la même manière, la fonction de transfert H tenue en mémoire en 16 peut être mémorisée soit sous forme d'une relation algébrique $T_{est} = H (T_{mes})$, soit sous forme d'un tableau de données préétablies donnant, pour chaque valeur $T_{mes}$, la valeur associée $T_{est}$.

L'expérience a montré que la courbe traduisant mathématiquement la relation entre la fréquence et la température ($T^3$ et/ou $T^2$ T) était susceptible de variation dans le temps, cette variation se traduisant essentiellement par une dérive de la fréquence pour une température donnée, la forme de la courbe f ($T^3$ et/ou $T^2$, T) restant sensiblement inchangée.

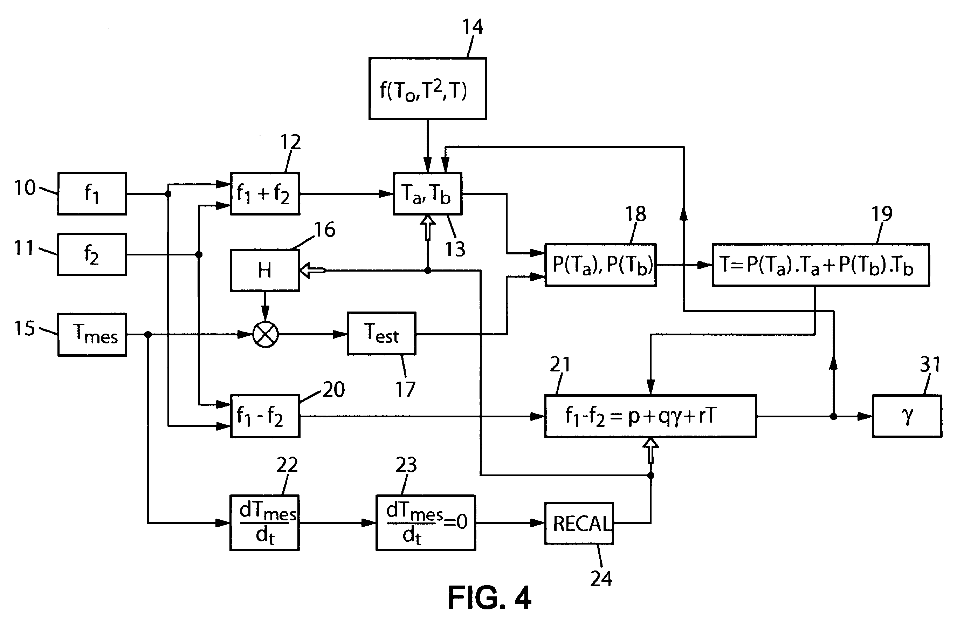

Pour obtenir un procédé de calcul de l'accélération $\gamma$ qui reste précis dans le temps, il est très souhaitable de prévoir une recalibration comme illustrée sur la figure 4 des dessins annexés.

Dans ce but, on ajoute, aux étapes précédemment décrites, les étapes suivantes apparaissant à la figure 4 (laquelle est dérivée plus précisément de la figure 3A). A partir de la valeur mesurée de la température $T_{mes}$, on calcule en 22 la dérivée par rapport au temps $dT_{mes}/dt$. Si on détecte, en 23, que cette dérivée est nulle ou voisine de zéro, on commande en 24 un processus de recalibration RECAL propre à agir sur la fonction de transfert tenue en mémoire en 16, sur le calcul/sélection en 13 des valeurs possibles de température $T_a$, $T_b$, et sur le calcul en 21 de la valeur $f_1 - f_2 = p + q \gamma + r T$ conduisant, d'une façon simple, à la détermination de l'accélération $\gamma$.

Enfin, on notera que l'accélération $\gamma$ est calculée de façon itérative, par passes de calcul successives, et que chaque passe de calcul prend en compte la valeur de l'accélération trouvée à l'issue de la passe de calcul précédente, en particulier pour la compensation de la somme $f_1 + f_2$ évoquée plus haut lorsque $k_1 \neq k_2$.

En pratique, plusieurs dispositifs vibrants peuvent être regroupés pour fournir des informations accélérométriques et/ou gyrométriques ou gyroscopiques selon deux ou trois axes de référence (par exemple bloc senseur inertiel), tous ces dispositifs vibrants faisant individuellement appel à une mesure de température pour la détermination des valeurs compensées des fréquences de vibration. Selon l'invention, la mesure accélérométrique et/ou gyroscopique et/ou gyrométrique compensée en température, effectuée pour chaque dispositif à deux résonateurs vibrants, prend en compte non seulement sa propre valeur de température pondérée, mais aussi au moins certaines températures pondérées prédéterminées pour d'autres dispositifs vibrants de manière à obtenir une valeur de fréquence interpolée en relation avec au moins certaines des températures mesurées.

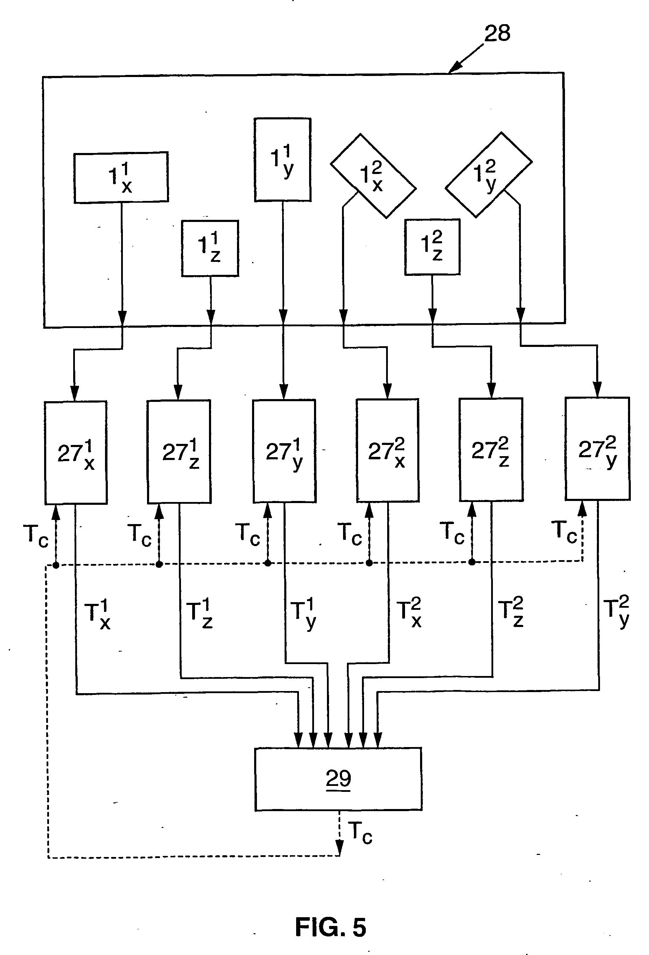

A titre d'exemple, on a représenté très schématiquement, à la figure 5, un capteur inertiel 28 regroupant trois dispositifs vibrants de mesures accélérométriques selon trois axes x, y, z d'un référentiel, chaque dispositif vibrant pouvant être du type illustré à la figure 2 et étant référencé respectivement $1_x^1$, $1_y^1$ et $1_z^1$, ainsi que trois dispositifs vibrants de mesures gyroscopiques par rapport aux trois axes x, y, z du référentiel, chaque dispositif vibrant pouvant être du type illustré à la figure 2 et étant référencé respectivement $1_x^2$, $1_y^2$ et $1_z^2$.

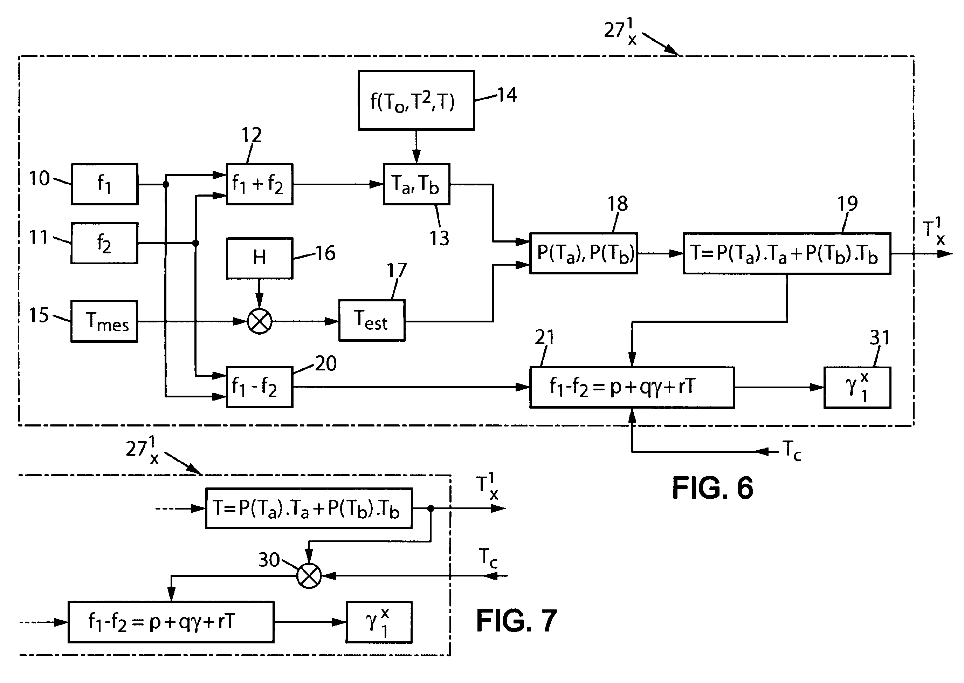

A chaque dispositif vibrant précité est associée une unité de traitement d'information qui reçoit les informations $f_1$, $f_2$ et $T_{mes}$ fournies par chaque dispositif. Comme illustré à la figure 6, chaque unité 27 est agencée (à titre d'exemple) conformément à la représentation donnée à la figure 3A. La figure 6 montre, à titre d'exemple, l'unité $27_x^1$ associée au dispositif vibrant $1_x^1$, étant entendu que les autres unités associées respectivement aux autres dispositifs vibrants lui sont identiques.

Toutes les valeurs pondérées de température déterminées par toutes les unités 27, $T_x^1$, $T_y^1$, $T_z^1$, $T_x^2$, $T_y^2$, $T_z^2$, sont envoyées à un dispositif de corrélation 29 qui, sur la base d'une corrélation préétablie (par exemple calcul de la moyenne), délivre une valeur corrélée de température $T_c$, qui est ensuite délivrée à chaque unité 27.

Dans l'unité 27, la valeur corrélée $T_c$ peut alors être utilisée directement en 21 pour calculer, à partir de $f_1 - f_2$, la valeur de la composante d'accélération ($\gamma_x^1$ à la figure 6).

On pourrait aussi envisager, comme illustré à la figure 7 qui ne montre qu'une partie de l'unité $27_x^1$, que la valeur corrélée de température $T_c$ soit combinée, selon une loi préétablie, en 30 avec la valeur pondérée $T_x^1$, la valeur résultante étant utilisée pour le calcul de la composante $\gamma_x^1$ à partir de la valeur $f_1 - f_2$.

Bien entendu, de nombreuses variantes de corrélation en température peuvent être envisagées, par exemple : corrélation pour les températures des seuls dispositifs vibrants accélérométriques et corrélation pour les températures des seuls dispositifs vibrants gyroscopiques ; corrélation croisée entre les températures des dispositifs accélérométriques et gyroscopiques ; etc....

Un avantage économique peut être obtenu lorsque tous les dispositifs vibrants sont usinés dans un seul et unique bloc de cristal ou "wafer". Les dispositifs vibrants sont alors situés à proximité immédiate les uns des autres et il n'est plus besoin d'affecter un capteur de température à chacun d'eux : selon la configuration d'implantation mutuelle des dispositifs, un seul capteur de température disposé centralement peut suffire, ou à tout le moins deux capteurs de température peuvent être prévus, l'un associé aux dispositifs vibrants de mesures accélérométriques et l'autre aux dispositifs vibrants de mesures gyroscopiques ou gyrométriqués. On recueille ainsi un gain de dimension pour le substrat et une économie quant à la capacité de traitement des informations.

C'est en particulier dans le cas de la mise en oeuvre de plusieurs dispositifs vibrants localisés de façon adjacente que l'on peut être amené à traiter une grandeur G représentative de la température sans faire appel à la température elle-même. Un tel cas peut se présenter par exemple lorsqu'au dispositif 1 à deux résonateurs vibrants de fréquence $f_1$ et $f_2$ est adjoint, de façon adjacente, un dispositif vibrant tel qu'un résonateur gyroscopique du type dit "en bol", dont la fréquence de résonance varie linéairement en fonction de la température et peut s'écrire f = mT + n où m et n sont des constantes. On comprend alors que mesurer la fréquence f de ce dispositif vibrant fournit une indication de température qui, à une constante près, est équivalente à une mesure directe de la température à l'aide d'un capteur de température.

De ce fait, le traitement de la grandeur précitée G(T), si celle-ci varie de façon simple en fonction de la température, permet d'assurer le déroulement du procédé de mesure accélérométrique selon l'invention sans qu'il soit nécessaire de mettre en oeuvre un capteur de température à proprement parler.

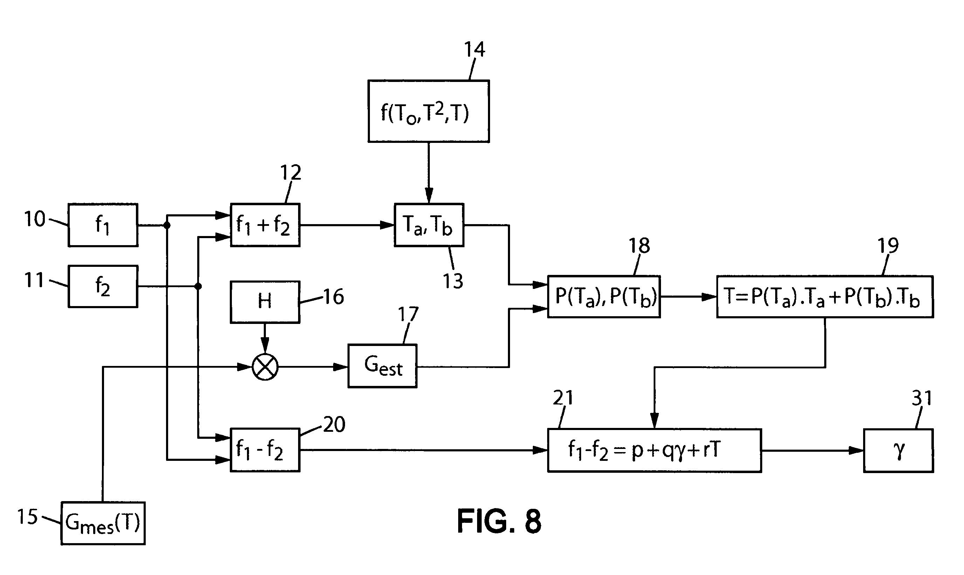

C'est un agencement de ce type qui est illustré à la figure 8 dont le schéma est calqué sur celui de la figure 3A. En 15, on mesure la valeur $G_{mes}$ d'une grandeur G(T), notamment dans un dispositif vibrant adjacent au dispositif 1 à deux résonateurs vibrants de fréquence $f_1$ et $f_2$, ladite grandeur G(T) étant ainsi représentative de la température à proximité dudit dispositif vibrant 1. Puis, à l'aide d'une fonction de transfert H préalablement établie en 16, on détermine une valeur estimée $G_{estimée} = H(G_{mes})$ de la susdite grandeur G(T), la valeur estimée $G_{estimée}$ étant représentative de la température estimée des résonateurs vibrants de fréquence $f_1$ et $f_2$. C'est ensuite cette valeur $G_{estimée}$ qui est utilisée, en conjonction avec les valeurs $T_a$, $T_b$, pour déterminer les probabilités $P(T_a)$ et $P(T_b)$ évoquées plus haut, sans que la valeur de la température estimé $T_{estimée}$ intervienne de façon effective.

Une telle solution présente l'intérêt d'éviter de mettre en oeuvre un ou plusieurs capteurs de température, ce qui est avantageux sur le plan économique. En outre, l'élimination d'un ou plusieurs composants dans un bloc senseur inertiel est toujours particulièrement apprécié en raison du gain de place et d'encombrement ainsi obtenu qui va dans le sens de la recherche de blocs senseurs inertiels toujours plus compacts.

## Revendications

1. Procédé de mesure accélérométrique par détermination de la valeur, compensée en fonction de la température, d'une accélération à partir de mesures de fréquences faites sur au moins un dispositif accélérométrique (1) à deux résonateurs vibrants, de géométries similaires travaillant respectivement dans des états de contraintes de signes opposés, le procédé comprenant
les étapes qui suivent :

- le dispositif (1) étant soumis à une composante d'accélération (γ), on détermine les fréquences $f_1$ ( 10) et $f_2$ (11) des vibrations respectives des deux résonateurs vibrants, sachant que les valeurs respectives de ces deux fréquences sont influencées par l'accélération (γ) et par la température ;
- on détermine ( 12) la somme $f_1 + f_2$ des deux fréquences mesurées, sachant que cette somme est influencée par la température ;

**caractérisé en ce qu'**il comprend de plus les étapes qui suivent :

- à partir d'une corrélation préétablie (14) de la variation de la quantité $f_1 + f_2$ en fonction de la température , on relève (13) les valeurs possibles $T_i$ de température correspondant à la valeur de la somme $f_1 + f_2$ ci-dessus déterminée ;
- on mesure (15) la valeur $G_{mes}$ d'une grandeur représentative de la température à proximité du dispositif (1) à deux résonateurs vibrants ;
- à l'aide d'une fonction de transfert H préalablement établie (16), on détermine (17) une valeur estimée $G_{estimée}$ = $H(G_{mes})$ de la susdite grandeur à partir de ladite valeur mesurée $G_{mes}$, cette grandeur estimée étant représentative de la température estimée des résonateurs vibrants ;
- à partir de la valeur estimée $G_{estimée}$ de ladite grandeur et des valeurs possibles de température $T_i$ , on détermine (18), pour chaque valeur possible $T_i$ les probabilités $P(T_i)$ pour que chaque valeur possible $T_i$ soit la valeur exacte de la température des résonateurs ;
- on calcule (19) une valeur pondérée T de la température des résonateurs vibrants $T = \Sigma P(T_i) \times T_i$ ; et
- à partir d'une ou des fréquences mesurées $f_1$ et $f_2$ et de la valeur pondérée T de la température, on détermine (21) la valeur compensée en température de l'accélération subie par le dispositif accélérométrique.

2. Procédé selon la revendication 1, **caractérisé en ce que** la somme des fréquences $f_1 + f_2$ est corrigée, pour tenir compte de différences géométriques entre les deux résonateurs vibrants, avec un terme d'erreur estimé à partir de l'accélération calculée lors du cycle de calcul précédent, s'il existe.

3. Procédé selon la revendication 1 ou 2, **caractérisé en ce que** l'influence de la température sur la valeur de la vibration de chaque résonateur vibrant est traduite par un polynôme d'ordre 2: $\Pi(T^2)$ ou par un polynôme d'ordre

3: $\Pi(T^3)$, et **en ce que**, dans la susdite suite d'étapes du procédé,

- à partir de la corrélation préétablie (14, 25, 26) de la variation de la somme des fréquences mesurées $f_1 + f_2$ en fonction de la température, on relève (13) les deux valeurs possibles de température $T_a$, $T_b$ correspondant à la valeur de la somme des fréquences $f_1 + f_2$ ci-dessus déterminée
et
- à partir de la valeur estimée $G_{estimée}$ (17) de ladite grandeur et des deux valeurs possibles de température $T_a$, $T_b$, on détermine (18) la probabilité $P(Ta)$ pour que la température des résonateurs soit l'une de ces températures $T_a$ et la probabilité $P(T_b)$ pour que la température des résonateurs soit l'autre de ces températures $Tb$,
- puis on calcule (19) une valeur pondérée de la température

$$T = P(T_a).T_a + P(T_b).T_b.$$

4. Procédé selon la revendication 3, **caractérisé en ce que** la corrélation préétablie est une fonction mathématique du second ou du troisième degré, tenue en mémoire (14), représentant la variation de la fréquence en fonction de la température établie pour le dispositif accélérométrique (1) considéré à deux résonateurs vibrants.

5. Procédé selon la revendication 3, **caractérisé en ce que** la corrélation préétablie est une table de correspondance tenue en mémoire (14), donnant, pour chaque valeur de la fréquence $f_1 + f_2$, les deux valeurs possibles $T_a$, $T_b$ de la température.

6. Procédé selon l'une quelconque des revendications 1 à 5, **caractérisé en ce que** la fonction de transfert H est une fonction mathématique tenue en mémoire (16) et établie expérimentalement pour le dispositif accélérométrique (1) considéré à deux poutres vibrantes ($P_1$, $P_2$).

7. Procédé selon l'une quelconque des revendications 1 à 5, **caractérisé en ce que** la fonction de transfert H est une table tenue en mémoire (16) et donnant une correspondance préétablie entre chaque valeur mesurée $G_{mes}$ et une valeur estimée $G_{estimée}$.

8. Procédé selon l'une quelconque des revendications (1 à 7), **caractérisé en ce qu'**on effectue (22-24) un recalage sur la fonction de transfert H (16), sur la sélection (13) des valeurs possibles $T_i$ de température et sur le calcul final (21) lorsqu'on constate une dérive de la courbe de corrélation entre la fréquence et la température.

9. Procédé selon l'une quelconque des revendications 1 à 8, **caractérisé en ce que** les fréquences $f_1$, $f_2$ des vibrations respectives des deux résonateurs vibrants sont mesurées (10, 11).

10. Procédé de mesures accélérométriques et/ou gyroscopiques et/ou gyrométriques selon plusieurs axes (x, y, z à l'aide de plusieurs dispositifs vibrants accélérométriques $1_x^1, 1_y^1, 1_z^1$ et/ou gyroscopiques et/ou gyrométriques $1_x^2, 1_y^2, 1_z^2$ respectifs, **caractérisé en ce que**, selon chaque axe x, y, z, on détermine une valeur de l'accélération $\gamma_1^x, \gamma_1^y, \gamma_1^z; \gamma_2^x, \gamma_2^y, \gamma_2^z$ compensée en température selon l'une quelconque des revendications 1 à 9, et **en ce que**, pour la détermination de l'une au moins des valeurs de l'accélération compensée en température, on utilise, en tant que valeur pondérée de température $T_c$, la valeur pondérée de température $T_x^1, T_y^1, T_z^1; T_x^2, T_y^2, T_z^2$ déterminée pour le dispositif vibrant associé à cet axe x, y, z ainsi qu'au moins une valeur pondérée de température $T_c$ déterminée pour au moins un dispositif vibrant associé à au moins un autre axe.

11. Procédé de mesure accélérométrique et/ou gyroscopique et/ou gyrométrique selon plusieurs axes selon la revendication 10, **caractérisé en ce que** tous les résonateurs vibrants des dispositifs accélérométriques $1_x^1, 1_y^1, 1_{z_i}^1$ et/ou gyroscopiques et/ou gyrométriques $1_x^2, 1_y^2, 1_z^2$ sont usinés dans un même bloc de cristal.

**12.** Procédé selon l'une quelconque des revendications 1 à 11, **caractérisé en ce que** la grandeur $G_{mes}$ (T) représentative de la température à proximité d'un dispositif (1) à deux résonateurs vibrants est la température $T_{mes}$ elle-même qui est mesurée (15) à proximité du dispositif à deux résonateurs vibrants, et **en ce qu'**à l'aide de la fonction de transfert H préalablement établie (16), on détermine (17) une valeur estimée $T_{estimée}$ = H($T_{mes}$) de la température des résonateurs vibrants à partir de la valeur mesurée $T_{mes}$.

**13.** Procédé selon la revendication 12, **caractérisé en ce que** la température $T_{mes}$ est mesurée à l'extérieur d'un boîtier (B) du dispositif (1) qui renferme les deux résonateurs vibrants.

**14.** Procédé selon la revendication 12, **caractérisé en ce que** la température $T_{mes}$ est mesurée à l'intérieur d'un boîtier (B) du dispositif (1) qui renferme les deux résonateurs vibrants.

**15.** Procédé selon la revendication 10 ou 11, **caractérisé en ce que** l'un au moins des dispositifs vibrants a une fréquence de résonance qui varie linéairement en fonction de la température et **en ce que** c'est cette fréquence dépendant linéairement de la température qui est mesurée et utilisée en tant que grandeur représentative de la température.

**Claims**

**1.** A method for accelerometer measurement by determination of the value, compensated as a function of temperature, of an acceleration on the basis of measurements of frequencies made on at least one accelerometer device (1) having two vibrating resonators of similar geometries working respectively in stress states of opposite signs, the method

comprising the steps which follow:

- the device (1) being subjected to a component of acceleration ($\gamma$), the frequencies $f_1$ (10) and $f_2$ (11) of the respective vibrations of the two vibrating resonators are determined, given that the respective values of these two frequencies are influenced by the acceleration ($\gamma$) and by the temperature ;
- the sum $f_1 + f_2$ of the two measured frequencies is determined (12), given that this sum is influenced by the temperature;

**characterized in that** it further comprises the steps which follow :

- on the basis of a pre-established correlation (14) of the variation of the quantity $f_1 + f_2$ as a function of temperature, the possible temperature values $T_i$ corresponding to the value of the abovedetermined sum $f_1 + f_2$ are plotted (13);
- the value $G_{mes}$ of a magnitude representative of the temperature in proximity to the device (1) having two vibrating resonators is measured (15);
- with the aid of a previously established transfer function H (16), an estimated value $G_{estimated}$ = H(Gmes) of abovesaid magnitude is determined (17) on the basis of said measured value $G_{mes}$, this estimated magnitude being representative of the estimated temperature of the vibrating resonators;
- on the basis of the estimated value $G_{estimated}$ of said magnitude and of the possible temperature values $T_i$, the probabilities $P(T_i)$ that each possible value $T_i$ is the exact value of the temperature of the resonators is determined (18), for each possible value $T_i$;
- a weighted value T of the temperature of the vibrating resonators is calculated (19) $T = \Sigma P (T_i) \times T_i$; and
- on the basis of one or more measured frequencies $f_1$ and $f_2$ and of the weighted value T of the temperature, the temperature-compensated value of the acceleration undergone by the accelerometer device is determined (21).

**2.** The method as claimed in claim 1, **characterized in that** the sum of the frequencies $f_1 + f_2$ is corrected, so as to take account of geometrical differences between the two vibrating resonators, with an error term estimated on the basis of the acceleration calculated during the previous calculation cycle, if it exists.

**3.** The method as claimed in claim 1 or 2, **characterized in that** the influence of the temperature on the value of the vibration of each vibrating resonator is conveyed by a polynomial of order 2: $\Pi (T^2)$ or by a polynomial of order 3: $\Pi(T^3)$, and **in that**, in abovesaid series of steps of the method,

- the two possible temperature values $T_a$, $T_b$ corresponding to the value of the abovedetermined sum of the frequencies $f_1 + f_2$ are plotted (13) on the basis of the pre-established (14, 25, 26) correlation of the variation of the sum of the measured frequencies $f_1 + f_2$ as a function of temperature; and

- the probability $P(T_a)$ that the temperature of the resonators is one of these temperatures $T_a$ and the probability $P(T_b)$ that the temperature of the resonators is the other of these temperatures $T_b$ are determined (18) on the basis of the estimated value $G_{estimated}$ (17) of said magnitude and of the two possible temperature values $T_a$, $T_b$,

- then a weighted value of the temperature is calculated (19)

$$T = P(T_a).T_a + P(T_b).T_b.$$

4. The method as claimed in claim 3, **characterized in that** the pre-established correlation is a mathematical function of second or third degree, held in memory (14), representing the variation of the frequencies as a function of the temperature established for the relevant accelerometer device (1) having two vibrating resonators.

5. The method as claimed in claim 3, **characterized in that** the pre-established correlation is a correspondence table held in memory ( 14), giving, for each value of the frequency $f_1 + f_2$, the two possible values $T_a$, $T_b$ of the temperature.

6. The method as claimed in any one of claims 1 to 5, **characterized in that** the transfer function H is a mathematical function held in memory ( 16) and established experimentally for the relevant accelerometer device (1) having two vibrating beams ($P_1$, $P_2$).

7. The method as claimed in any one of claims 1 to 5, **characterized in that** the transfer function H is a table held in memory (16) and giving a pre-established correspondence between each measured value $G_{mes}$ and an estimated value $G_{estimated}$.

8. The method as claimed in any one of the preceding claims, **characterized in that** a readjustment is performed (22 - 24) on the transfer function H (16), on the selection (13) of the possible temperature values $T_i$ and on the final calculation (21) when a drift is noted in the curve of the correlation between frequency and temperature.

9. The method as claimed in any one of the preceding claims, **characterized in that** the frequencies $f_1$, $f_2$ of the respective vibrations of the two vibrating resonators are measured (10, 11).

10. A method of accelerometric and/or gyroscopic and/or gyrometric measurements in several axes x, y, z with the aid of several respective accelerometric $l_x^1, l_y^1, l_z^1$ and/or gyroscopic and/or gyrometric $l_x^2, l_y^2, l_z^2$ vibrating devices, **characterized in that**, in each axis x, y, z, a value of the temperature-compensated acceleration $\gamma_1^x, \gamma_1^y, \gamma_1^z; \gamma_2^x, \gamma_2^y, \gamma_2^z$ is determined according to any one of claims 1 to 9,

and **in that**, for the determination of one at least of the values of the temperature-compensated acceleration, the weighted value of temperature $T_x^1, T_y^1, T_z^1; T_x^2, T_y^2, T_z^2$ determined for the vibrating device associated with this axis x, y, z together with at least one weighted value of temperature Tc determined for at least one vibrating device associated with at least one other axis are used as weighted temperature value Tc.

11. The method of accelerometric and/or gyroscopic and/or gyrometric measurement in several axes as claimed in claim 10, **characterized in that** all the vibrating resonators of the accelerometric $l_x^1, l_y^1, l_z^1$ and/or gyroscopic and/or gyrometric $l_x^2, l_y^2, l_z^2$ devices are machined from one and the same block of crystal.

12. The method as claimed in any one of claims 1 to 11, **characterized in that** the magnitude $G_{mes}$ (T) representative of the temperature in proximity to a device (1) having two vibrating resonators is the temperature $T_{mes}$ itself which is measured (15) in proximity to the device having two vibrating resonators, and **in that** with the aid of the transfer function H previously established (16), an estimated value $T_{estimated}$ = H ($T_{mes}$) of the temperature of the vibrating resonators is determined (17) on the basis of the measured value $T_{mes}$.

**13.** The method as claimed in claim 12, **characterized in that** the temperature $T_{mes}$ is measured outside a box (B) of the device (1) that encloses the two vibrating resonators.

**14.** The method as claimed in claim 12, **characterized in that** the temperature $T_{mes}$ is measured inside a box (B) of the device (1) that encloses the two vibrating resonators.

**15.** The method as claimed in claim 10 or 11, **characterized in that** one at least of the vibrating devices has a resonant frequency that varies linearly as a function of temperature and **in that** it is this linearly temperature dependent frequency that is measured and used as magnitude representative of the temperature

**Patentansprüche**

**1.** Verfahren zur Beschleunigungsmessung durch Bestimmung des temperaturabhängig kompensierten Werts einer Beschleunigung ausgehend von Frequenzmessungen, die an mindestens einer Beschleunigungsmessvorrichtung (1) mit zwei vibrierenden Resonatoren ähnlicher Geometrien, die je in Spannungszuständen mit entgegengesetzten Vorzeichen arbeiten, durchgeführt werden, wobei das Verfahren die folgenden Schritte enthält:

- wenn die Vorrichtung (1) einer Beschleunigungskomponente ($\gamma$) ausgesetzt ist, werden die Frequenzen $f_1$ (10) und $f_2$ (11) der jeweiligen Vibrationen der zwei vibrierenden Resonatoren bestimmt, da die jeweiligen Werte dieser zwei Frequenzen von der Beschleunigung ($\gamma$) und von der Temperatur beeinflusst werden;
- die Summe $f_1 + f_2$ der zwei gemessenen Frequenzen wird bestimmt (12), da diese Summe von der Temperatur beeinflusst wird;

**dadurch gekennzeichnet, dass** es außerdem die folgenden Schritte enthält:

- ausgehend von einer vorab erstellten Korrelation (14) der Änderung der Menge $f_1 + f_2$ in Abhängigkeit von der Temperatur werden die möglichen Temperaturwerte $T_i$ erfasst (13), die dem Wert der oben bestimmten Summe $f_1 + f_2$ entsprechen;
- der Wert $G_{mes}$ einer für die Temperatur in der Nähe der Vorrichtung (1) mit zwei vibrierenden Resonatoren repräsentativen Größe wird gemessen (15);
- mit Hilfe einer vorab erstellten (16) Transferfunktion H wird ein geschätzter Wert $G_{geschätzt} = H\ (Gmes)$ der obigen Größe ausgehend von dem gemessenen Wert $G_{mes}$ bestimmt (17), wobei diese geschätzte Größe für die geschätzte Temperatur der vibrierenden Resonatoren repräsentativ ist;
- ausgehend von dem geschätzten Wert $G_{geschatzt}$ der Größe und von den möglichen Temperaturwerten $T_i$ werden für jeden möglichen Wert $T_i$ die Wahrscheinlichkeiten $P(T_i)$ bestimmt (18), damit jeder mögliche Wert $T_i$ der genaue Wert der Temperatur der Resonatoren ist;
- ein gewichteter Wert T der Temperatur der vibrierenden Resonatoren $T = \Sigma\ P(T_i)\ x\ T_i$ wird berechnet (19); und
- ausgehend von einer oder mehreren gemessenen Frequenzen $f_1$ und $f_2$ und vom gewichteten Wert T der Temperatur wird der temperaturkompensierte Wert der von der Beschleunigungsmessvorrichtung erfahrenen Beschleunigung bestimmt (21).

**2.** Verfahren nach Anspruch 1, **dadurch gekennzeichnet, dass** die Summe der Frequenzen $f_1 + f_2$ korrigiert wird, um geometrische Unterschiede zwischen den zwei vibrierenden Resonatoren zu berücksichtigen, mit falls er existiert, einem Fehlerterm, der ausgehend von der im vorhergehenden Rechenzyklus berechneten Beschleunigung bestimmt wird.

**3.** Verfahren nach Anspruch 1 oder 2, **dadurch gekennzeichnet, dass** der Einfluss der Temperatur auf den Wert der Vibration jedes vibrierenden Resonators durch ein Polynom zweiter Ordnung: $\Pi(T^2)$ oder durch ein Polynom dritter Ordnung: $\Pi(T^3)$ ausgedrückt wird, und dass in der obigen Folge von Schritten des Verfahrens,

- ausgehend von der vorab erstellten Korrelation (14, 25, 26) der Änderung der Summe der gemessenen Frequenzen $f_1 + f_2$ abhängig von der Temperatur die zwei möglichen Temperaturwerte $T_a$, $T_b$ erfasst werden (13), die dem oben bestimmten Wert der Summe der Frequenzen $f_1 + f_2$ entsprechen; und
- ausgehend von dem geschätzten Wert $G_{geschätzt}$ (17) der Größe und den zwei möglichen Temperaturwerten $T_a$, $T_b$ die Wahrscheinlichkeit $P(T_a)$, dass die Temperatur der Resonatoren die eine dieser Temperaturen $T_a$ ist, und die Wahrscheinlichkeit $P(T_b)$, dass die Temperatur der Resonatoren die andere dieser Temperaturen $T_b$ ist, bestimmt werden (18),

- dann ein gewichteter Wert der Temperatur

$$T = P(T_a).T_a + P(T_b).T_b$$

berechnet wird (19).

**4.** Verfahren nach Anspruch 3, **dadurch gekennzeichnet, dass** die vorab erstellte Korrelation eine gespeicherte (14) mathematische Funktion zweiten oder dritten Grads ist, die die Änderung der Frequenz abhängig von der Temperatur darstellt, die für die betrachtete Beschleunigungsmessvorrichtung (1) mit zwei vibrierenden Resonatoren erstellt wurde.

**5.** Verfahren nach Anspruch 3, **dadurch gekennzeichnet, dass** die vorab erstellte Korrelation eine gespeicherte (14) Korrespondenztabelle ist, die für jeden Wert der Frequenz $f_1 + f_2$ die zwei möglichen Werte $T_a$, $T_b$ der Temperatur angibt.

**6.** Verfahren nach einem der Ansprüche 1 bis 5, **dadurch gekennzeichnet, dass** die Transferfunktion H eine gespeicherte (16) und experimentell für die betrachtete Beschleunigungsmessvorrichtung (1) mit zwei Schwingbalken ($P_1$, $P_2$) erstellte mathematische Funktion ist.

**7.** Verfahren nach einem der Ansprüche 1 bis 5, **dadurch gekennzeichnet, dass** die Transferfunktion H eine gespeicherte (16) Tabelle ist, die eine vorab erstellte Entsprechung zwischen jedem gemessenen Wert $G_{mes}$ und einem geschätzten Wert $G_{geschätzt}$ angibt.

**8.** Verfahren nach einem der Ansprüche 1 bis 7, **dadurch gekennzeichnet, dass** eine Rückstellung auf die Transferfunktion H (16), auf die Auswahl (13) der möglichen Temperaturwerte $T_i$ und auf die Endberechnung (21) durchgeführt wird (22-24), wenn eine Abweichung der Korrelationskurve zwischen der Frequenz und der Temperatur festgestellt wird.

**9.** Verfahren nach einem der Ansprüche 1 bis 8, **dadurch gekennzeichnet, dass** die Frequenzen $f_1$, $f_2$ der jeweiligen Vibrationen der zwei vibrierenden Resonatoren gemessen werden (10, 11).

**10.** Verfahren für Beschleunigungs- und/oder Gyroskop-und/oder Gyrometer-Messungen gemäß mehreren Achsen x, y, z mit Hilfe mehrerer vibrierender Beschleunigungs- $l_x^1, l_y^1, l_z^1$ und/oder Gyroskop- und/oder Gyrometer-Messvorrichtungen $l_x^2, l_y^2, l_z^2$, **dadurch gekennzeichnet, dass** gemäß jeder Achse x, y, z ein Wert der temperaturkompensierten Beschleunigung $\gamma_1^x, \gamma_1^y, \gamma_1^z, \gamma_2^x, \gamma_2^y, \gamma_2^z$ nach einem der Ansprüche 1 bis 9 bestimmt wird, und dass zur Bestimmung mindestens eines der Werte der temperaturkompensierten Beschleunigung als gewichteter Temperaturwert $T_c$ der gewichtete Temperaturwert $T_x^1, T_y^1, T_z^1, T_x^2, T_y^2, T_z^2$, der für die vibrierende Vorrichtung bestimmt worden ist, die dieser Achse x, y, z zugeordnet ist, sowie mindestens ein gewichteter Temperaturwert $T_c$ verwendet werden, der für mindestens eine vibrierende Vorrichtung bestimmt wird, die mindestens einer anderen Achse zugeordnet ist.

**11.** Verfahren zur Beschleunigungs- und/oder Gyroskop-und/oder Gyrometer-Messung gemäß mehreren Achsen nach Anspruch 10, **dadurch gekennzeichnet, dass** alle vibrierenden Resonatoren der Beschleunigungs- $l_x^1, l_y^1, l_z^1$ und/oder Gyroskop- und/oder Gyrometer-Messvorrichtungen $l_x^2, l_y^2, l_z^2$ aus dem gleichen Kristallblock hergestellt werden.

**12.** Verfahren nach einem der Ansprüche 1 bis 11, **dadurch gekennzeichnet, dass** die Größe $G_{mes}$ (T), die für die Temperatur in der Nähe einer Vorrichtung (1) mit zwei vibrierenden Resonatoren repräsentativ ist, die Temperatur $T_{mes}$ selbst ist, die in der Nähe der Vorrichtung mit zwei vibrierenden Resonatoren gemessen wird (15), und dass mit Hilfe der vorab erstellten (16) Transferfunktion H ein geschätzter Wert $T_{geschätzt} = H(T_{mes})$ der Temperatur der vibrierenden Resonatoren ausgehend vom gemessenen Wert $T_{mes}$ bestimmt wird (17).

**13.** Verfahren nach Anspruch 12, **dadurch gekennzeichnet, dass** die Temperatur $T_{mes}$ außerhalb eines Gehäuses (B) der Vorrichtung (1) gemessen wird, das die zwei vibrierenden Resonatoren enthält.

**14.** Verfahren nach Anspruch 12, **dadurch gekennzeichnet, dass** die Temperatur $T_{mes}$ innerhalb eines Gehäuses (B) der Vorrichtung (1) gemessen wird, das die zwei vibrierenden Resonatoren enthält.

**15.** Verfahren nach Anspruch 10 oder 11, **dadurch gekennzeichnet, dass** mindestens eine der vibrierenden Vorrichtungen eine Resonanzfrequenz hat, die linear abhängig von der Temperatur variiert, und dass es diese linear von der Temperatur abhängige Frequenz ist, die gemessen und als für die Temperatur repräsentative Größe verwendet wird.

**FIG. 1**

**FIG. 2**

$f(T_o, T^2, T)$ — 14

10 — $f_1$

11 — $f_2$

15 — $T_{mes}$

12 — $f_1 + f_2$

16 — $H$

13 — $T_a, T_b$

17 — $T_{est}$

20 — $f_1 - f_2$

18 — $P(T_a), P(T_b)$

19 — $T = P(T_a) \cdot T_a + P(T_b) \cdot T_b$

21 — $f_1 - f_2 = p + q\gamma + rT$

31 — $\gamma$

FIG. 3A

FIG. 3B

FIG. 4

FIG. 5

FIG. 6

FIG. 7

**FIG. 8**

EP 1 446 670 B1

EP 1 446 670 B1

**Documents brevets cités dans la description**

- FR 0010675
- FR 2784752 A
- FR 2685964 A
- US 5379639 A
- US 6230565 B1